# EUROPEAN PATENT APPLICATION

(11) **EP 1 813 327 A1**
(43) Date of publication of application: **01.08.2007**
(21) Application number: 07250296.6
(22) Date of filing: 25.01.2007
(51) Int. Cl.: A63F 13/08

(54) **Electronic device**

(30) Priority: 27.01.2006 GB 0601651
(71) Applicant: Gamze Ltd, Tsim Sha Tsui East (HK)
(72) Inventor: Fong, William, Tsim Sha Tsui Hong Kong (CN)
(74) Representative: Wood, Graham

(57) **Abstract**

The invention relates to a device, such as an electronic gaming device with which a user can interact to control at least one aspect of the same such as playing a game. The interaction is achieved via an array of sensors on or adjacent to at least one surface of the device and the selective placement of the users fingers on the surface at or adjacent to one or a plurality of the sensors in a designated sequence.

## Description

The invention to which this application relates is to a device which can be hand held and used as a gaming device, typically by a child, although it should be appreciated that the particular game or range of games which may be played using the device can be tailored to suit specific markets such as, for example, the games may be directed towards boys, girls, adults or any combination of the same.

The provision of gaming devices is well known and the same can typically be split into two types of hand held devices. A first type is that which is a relatively large hand held size and which incorporates a screen and a series of keys or buttons and/or stylus, at least some of which are directional buttons such as for example as used in the gaming device sold under the trade mark PSP. These type of devices tend to be a relatively larger size and have a larger range of functions, with the particular game to be played chosen by the user deciding which of a range of game cartridges to insert into the device. Thus, the software for the playing of a particular game, is carried on the cartridge which can selectively be inserted and, once inserted, the buttons or keys can be depressed selectively to interact with the game and control the playing of the same.

The second type of device tends to be relatively smaller and again has a series of keys which can be selectively depressed, to bring about the operation of the game. In this type of device, such as that sold under the trade mark TAMAGOTCHI, the software for the playing of the game is incorporated within the device and therefore, while there may be a series of games which can be selected to be played, each game is defined within the device and cannot be changed by the subsequent removal or insertion of games cartridges.

The aim of the present invention is to provide a gaming device and apparatus which add a further dimension to operation of the same and which can be incorporated within either form of device as herein described. A further aim is to provide a control system which allows user interaction with a device in an effective and easy to use manner.

In a first aspect of the invention, there is provided an electronic game device, said device having a display screen for depicting a particular state of interaction with the device, means to allow a game or games to be played using the device, a power source to allow the device to be operable, and control means to allow user interaction with the device, and wherein the control means includes one, or an array of, sensors, the location of which is/are identifiable on at least one surface of the device wherein user interaction with the device is achieved via activation of at least one sensor at an identifiable location to generate a control signal for the device in a particular manner determined by the particular sensor or sequence of sensors activated by the user.

In one embodiment, the sensors are arranged near a first external surface of the device in an identified configuration and in one embodiment are masked from the external surface by a covering layer in order to protect the same from damage but are provided sufficiently close to the external surface so as to allow detection of the presence of a person's finger to be achieved.

In one embodiment, the configuration and spacing of the sensors is typically geometrical and is selected so as to allow one finger of a user's hand to be able to reach each of the sensors in the array when the device is being held in the hand.

In one embodiment, user interaction with the device is achieved by the placement of a user's finger on or in the vicinity of, each of the sensor locations in a desired sequence. In one embodiment there is provided an integrated circuit which allows a particular game or games to be provided on the device and an integrated circuit connected thereto which allows detection and control of the game in sequence to the sensor operation. The two integrated circuit chips are then linked by control circuitry to allow the sensor and game operation to be controlled.

In one embodiment there is provided an analogue circuit in the Integrated Circuit for the sensor which can detect the change of the capacitance at the sensor. This change in capacitance is a result of a person's finger being placed on or in proximity to the particular sensor, and this allows, firstly the detection to be achieved and secondly, for the detection to be attributed to particular one of the plurality of sensors.

In addition or alternatively, the user can use a stylus which is held in the hand and which is placed on particular locations with respect to the sensor array rather than using the finger directly.

In one embodiment, the interaction with the device is achieved via one of the sensors in the array or alternatively, by the sequential activation of the sensors in the array by controlled movement of the user's finger. Particular sensor locations and different sequences of contact with the sensors result in different control signals being generated and hence different interaction with the device being achieved.

In one embodiment, the interaction with the device which is achieved, is used to control the playing of a particular game, the selection of a particular game from a range of games, and/or the switching on and off, or selection of other control features of the device.

In one embodiment, the device includes further control means which may be actuated using buttons or keys. It is envisaged that preferably the control signals which are required to be used most frequently and during the playing with the device are generated via the sensor array and those control means which are not required to be used as frequently, such as, for example, switching on or off, or reset features, may be operated using the depression of buttons.

In one embodiment, the power source can be either or both of batteries and/or or a mains power supply.

In one embodiment, the software which allows the playing of the game is integrated within the device or, alternatively, the software for the playing of a game is provided in a cartridge which can be selectively inserted into the device.

The display screen used can be of any suitable form but can for example, be an LCD screen on which features of the game or games which are played using the device can be displayed.

Typically, the device is hand held and can be held in one hand and interaction with the device can be achieved with the same hand.

In one embodiment, the game which is played using the device is in the form of training and controlling the activities of a virtual companion such as a pet animal.

In a further aspect of the invention, there is provided an electronic game device, said device having a display screen for depicting a particular state of interaction with the device, at least one integrated circuit to allow a game or games to be played using the device, a power source to allow the device to be operable and control means to allow user interaction with the device, and wherein the control means includes one, or an array of, sensors, the location of which is/are identifiable on at least one surface of the device so as to allow user interaction via at least one sensor at an identifiable location with the device to control the game which includes controlling the activity of a virtual companion depicted on the display screen.

In one embodiment the virtual companion is an animal depicted as a pet animal.

In one embodiment the particular sensor or sequence of sensor activations which are required to be followed by the user to generate a particular control signal is displayed on the display screen to allow the user to follow the display and activate the sensor or sensor depicted.

In another embodiment the person using the device can determine a particular sensor activation or sequence of sensor activations and then allocate said activation(s) to a particular function which is to be performed by the device. In this embodiment typically the sensor or sequence of sensor activations is stored in a memory in the device such that when the same is subsequently generated by the person, the designated function is performed by the device automatically.

In a further aspect of the invention, there is provided a game device, said device having a display screen for depicting a particular state of interaction with the device, means to allow a game or games to be played using the device, a power source to allow the device to be operable and control means to allow user interaction with the device, and wherein the device is provided to be held in one hand and control of the same is achieved by movement of a finger of the hand placed selectively with respect to one or a plurality of sensor control means provided on or adjacent at least one surface of the device.

Typically the sensors are provided on the same surface as the display screen.

In a further aspect of the invention, there is provided an electronic device, said device having means for indicating a particular state of interaction with the device, a power source to allow the device to be operable and control means to allow user interaction with the device, and wherein the user interacts with the control means via one, or an array of, sensors on the device and the user selectively places a finger or fingers in close proximity to the location of one sensor, or a plurality of the sensors in sequence, so as to define a control signal, said control signal used by the device to provide a change in condition of the device, if the control signal is recognised as one of a number of predefined control signals.

In one embodiment if the signal is not recognised as being one of the predefined signals an indication is generated to the user to cause them to retry.

Typically only one finger is required to be selectively moved and placed with regard to the one or more sensors to generate the control signal

Typically the location of the sensor(s) is/are identifiable on at least one surface of the device, although the sensors themselves may be offset to lie behind and be protected by the external surface.

In a further aspect of the invention, there is provided a method of interacting with an electronic game device, said device having a display screen for depicting a particular state of interaction with the device, means to allow a game or games to be played using the device, a power source to allow the device to be operable and control means to allow user interaction with the device, and wherein the user interacts with the control mean which includes one, or an array of, sensors on the device and the user places a finger or fingers in close proximity to the location of one or a plurality of the sensors in sequence so as to define a control signal, said control signal used by the device to provide a change in condition of the device, if the signal is recognised as one of a number of predefined signals.

Specific embodiments of the invention are now described with reference to the accompanying drawings, wherein:-
Figure 1 illustrates a front view of one embodiment of the device of the invention;
Figure 2 illustrates a rear view of the device of Figure 1; and
Figure 3 illustrates a perspective view of the device of Figures 1 and 2 held in the hand;
Figures 4a and b illustrates the sensor configuration in more detail.

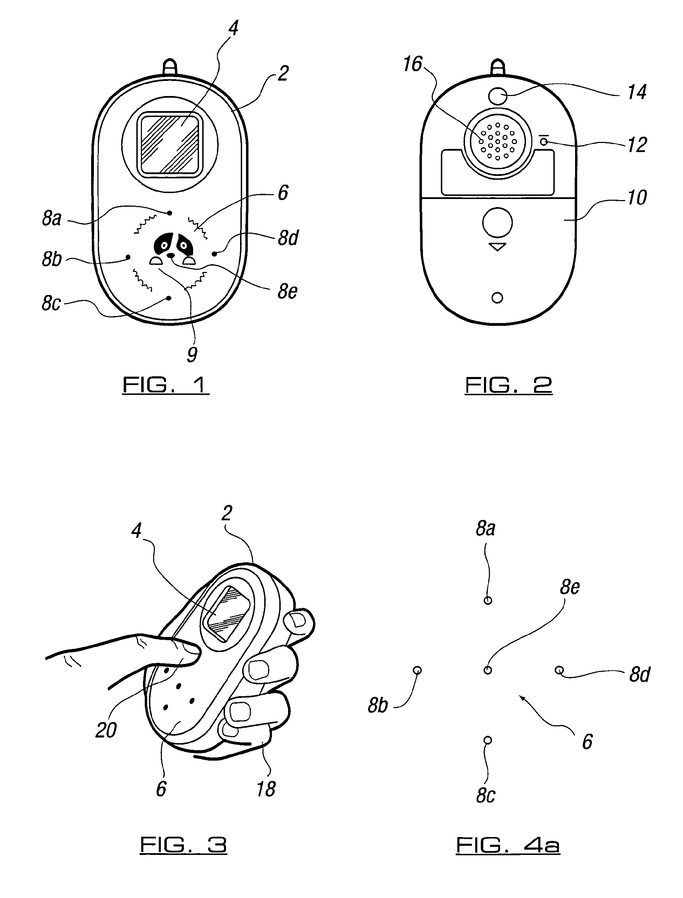

With reference to the Figures 1 and 4a there is provided a housing 2 with a display screen 4 and a sensor array 6 comprising a series of sensors 8a, b, c, d and e at spaced locations. In this embodiment, the sensors, as shown in Figure 1, can be spaced and located in conjunction with graphic information 9 which is placed onto the housing. To the rear of the device, there is provided a battery housing 10, a reset button 12 and a wake-up button 14 which moves the device from a stand-by condition to an active condition. A speaker 16 is also provided to emit audio which is linked to the change in condition of the display screen.

The device can be held in the hand 18 as indicated in Figure 3 and a finger of the same, or another hand, can be used to interact with the playing of the game on the device. This is achieved by moving or sliding a finger 20 to contact a particular sensor on different sensors 8a to e to contact the same in a particular sequence. Different sequences and/or different contact with different sensors, will achieve different interaction with the game integrated circuit provided within the device as finger movements by the user are detected by one or more sensors due to the detected change in capacitance when user's finger is near a particular sensor and hence generates different control signals which are then used to control or change condition of the game in response to each recognised control signal which is generated if that control signal matches one of a predefined range of control signals within a memory of the device.

In a preferred embodiment, the device will enter a stand-by mode if it is left idle for about 3 minutes, i.e no interaction is achieved via the sensors. The same can be moved from the stand-by and interactive mode by depressing the button 14 on the rear of the device.

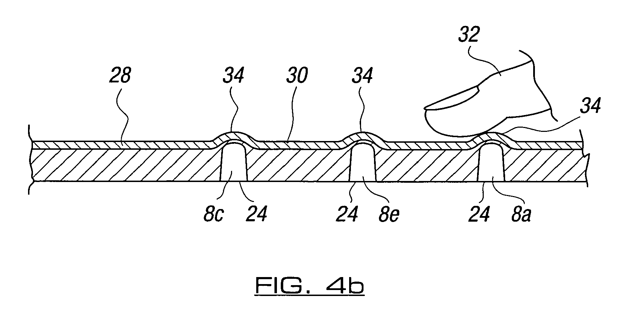

Figure 4b is a cross sectional view through part of the device in which the sensor array 6 is included and illustrates how the sensors are mounted on an inner plate 22 and in turn connected to control means via connections 24. The sensors are provided so as to detect a change in the measured capacitance at the same, with each sensor independently monitored. Thus when no users fingers are present in the vicinity of the sensors all of the sensors will have the same capacitance readings. However if the user places their finger in proximity to one of the sensors, the capacitance value for that sensor will change and be detected by the control circuitry along with the detail of the particular sensor which has changed condition. Depending on the predetermined control signals held in memory the activation of one sensor may cause interaction with the device to change condition of the same or a sequence of sensor capacitance changes may need to be caused by the movement of the users finger to lie over particular sensors in sequence to generate a particular sequence which is then recognised as a control signal equivalent to one of the stored control signals and interaction occurs accordingly. Typically when the finger is removed from a position over a particular sensor, the capacitance reading for that sensor changes quickly back to its original value.

The distal ends 26 of the sensors are protected by an external layer 28 of material which forms the outer external surface 30 of the device and onto which surface the user places their finger 32 in selected position with respect to the sensors. In this case the locations of the sensors is indicated by protrusions 34 in the external surface 30, to further ensure that the user can be confident that they have placed their finger correctly.

An example of user interaction with the device is now provided with respect to one embodiment of the device, where the game which is provided is related to looking after a pet animal, such as a dog, and in which the user interacts with the device via the sensors to control the activities of the pet animal, with the activities mirroring those of a real pet animal. Screen shots of the display screen are reproduced in the following description and also particular sensor detection sequences are illustrated with the sensors to be touched indicated by the black circles in the sensor array and the screen shots illustrating what the user will see on the device when certain operating conditions are created.
Key:
User Interaction Sensor sequence =e.g 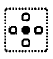
Display screen picture=e.g 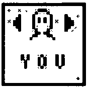

Once the device is initially switched on it is in the DEFAULT POSITION and waits for the user's instruction for the following aspects.

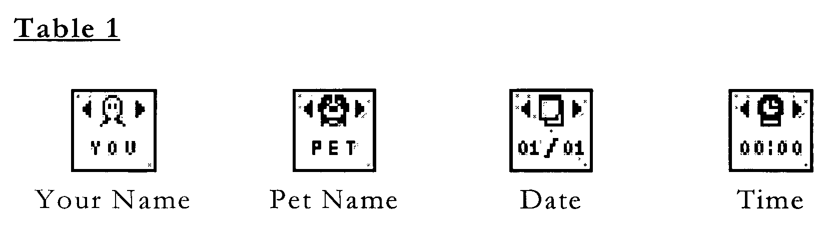

Table 1 illustrates the initialization mode display. The user is asked to enter Your Name first (Default: YOU). Sensors 8B / 8D are touched to go to the different aspects and sensors 8A / 8C of Figure 4 are touched to change the letters at the chosen place which will typically be flashing. Finally, sensor 8E is touched to confirm the selection. Then the user is asked to enter the Pet Name (Default: PET), Date (in the format MM / DD) and Time. Once they have confirmed the time, a signal is given and the device starts in the DEFAULT POSITION waiting for further interaction.

The user can then control the virtual companion, depicted on screen as shown in Table 2. For example the companion can move and say "Hello" by touching sensor (8E) or the companion can be caused to appear to move to the house by slidingly moving the finger on the sensors from right to left (8D -> 8E - > 8B). The device will acknowledge if the control signal is understood or not and if so will act accordingly.

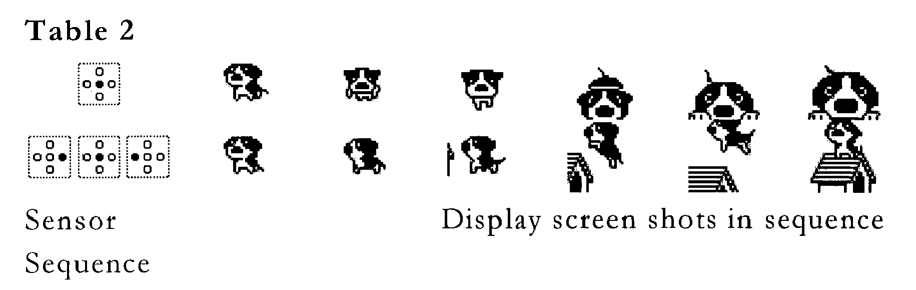

The device will react differently if it thinks the user has made an instruction but doesn't understand or forget how to do the action due to lack of training.

In one example, the user can touch the sensors to hear the companion bark when he forgets an action due to lack of training and touches the sensors in the sequence 8c to 8e to 8b for the barking sound when the device does not understand the control signal at all.

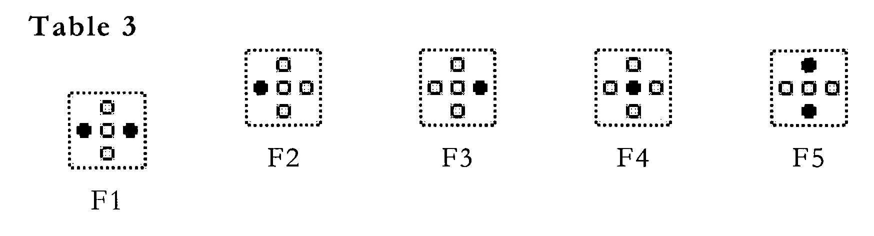

Referring now to Table 3 and Figure 4, when sensors 8D and 8B are touched simultaneously or in quick succession, (see F4 in table 3) the menu screen is entered. Different functions for the companion are grouped into six categories. They are shown in Table 4 and are Caring, Game, Training, Video, Camera and Setup. Touching sensors 8B / 8D [see F2 / F3] repeatedly allows browsing through menu items, a touch of 8E [see F4] confirms the selection. Finally, sensors 8A and 8C can be touched simultaneously or in quick succession [see F5] to leave.

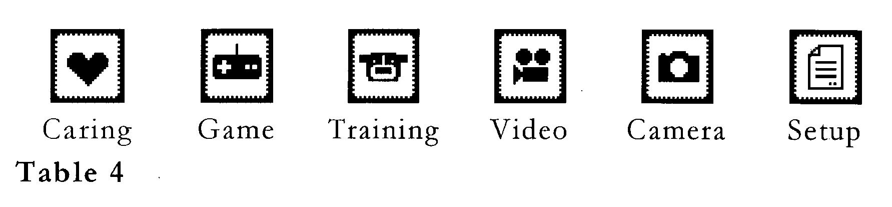

In the menu mode the menu icon for an appropriate action is chosen in the following sequence with the black circles in the sensor array indicating the sensors in the array which need to be touched.
1. 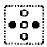 Go to the menu screen;
2. 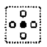 Confirm the selection when you see the Caring Menu 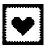 ;
3. 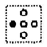 or 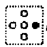 To browse through different sub-menus available in the Caring Menu;
4. 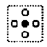 Confirm the selection when you see the Cleaning Menu 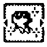 ;
5. 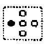 or 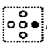 To browse through the sub-menu
6. 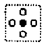 Confirm the selection when you see the Bathing Icon 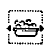 . This then results in the display screen generating a sequence of screen shots as show below to indicate a wasting effect as shown in Table 5.

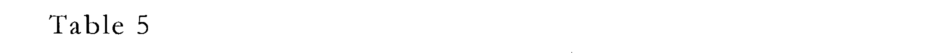

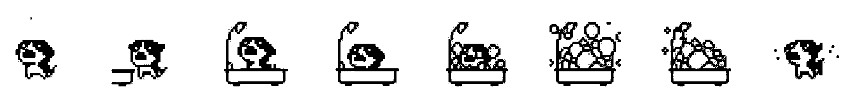

In one embodiment a particular image of the screen can be saved by touching sensors 8A/8E ( 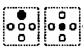 ). which will cause a shutter sound to be made and a picture of the screen display is saved. The album of saved displays is found in the Camera Menu 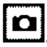 . Sensors 8B/8D allow browsing through different photos in the album.

Each of the menus shown in Table 4 have a series of functions, examples of which are provided below, for example:

1. Game 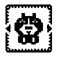

The user can enter the Game Menu 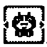 , and there are different games available for the user to play. When the game is found the device shows the user the Finger Instruction for interaction with the sensors needed in order to teach the companion to play the chosen game. For example, for the Ball Game, the following sensor sequence will be played repeatedly on screen:

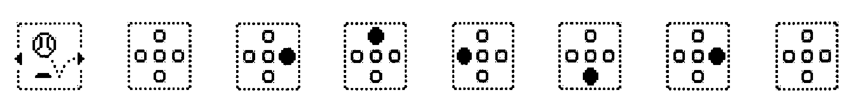

The sequence above will be played repeatedly before the user has a total understanding of the instruction. Then the user can follow the finger instruction on screen. The device will indicate if it understands the instruction and play the chosen game straight after his acknowledgement

Other possibilities are:

2. Feeding 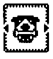

Foods available to the pet animal in this example include Watery 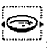 , Milk 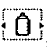 , Meat 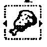 and Dog Food 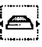 . Depending on how the device is controlled, the pet animal will take food in a different manner.

**3. Cleaning** 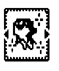

From this menu, the user can either choose to Brush 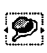 or Bhtr 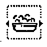 the pet animal or Clean his House 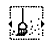 . The display indicates if the pet animal is dirty, or there is a lack of brushing.

4. Jogging 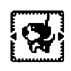

The device can be controlled to perform a walk 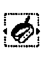 or sometime running 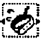 action of the pet animal to keep him fit and happy. Again abnormal behavior can occur if this does not occur.

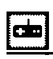 Game Menu

There can also be provided a number of interactive games for the user to play with the pet animal depicted as part of the gameplay.

In one embodiment the user can define the sensor array and attribute the same to specific interactions with the device. For example if the user assigns the following actions 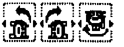 to a First Instruction they will
Browse to a set finger touch sequence 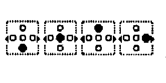 in Make your own Instruction.
Follow the finger motion on screen, and if the device understands it, this is indicated and the user waits in the Default Position for the first instruction.
Do the finger instruction for 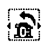 - 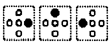 If the device understands, the pet animal will be shown rolling to the left.
Then do the finger instruction for 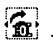 - 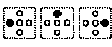
Finally, do the finger instruction for 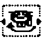 -.

The device will then indicate to confirm he has remembered the sequence of instruction.

There is therefore provided a device in accordance with the invention which allows user interaction with the same via a series or an array of sensors in a manner not previously known which, in turn allows the device to be held and interacted with via one hand.

## Claims

1. An electronic game device, said device having a display screen for depicting a particular state of interaction with the device, means to allow a game or games to be played using the device, a power source to allow the device to be operable, and control means to allow user interaction with the device, and wherein the control means includes one, or an array of, sensors, the location of which is/are identifiable on at least one surface of the device wherein user interaction with the device is achieved via activation of at least one sensor at an identifiable location to generate a control signal for the device in a particular manner determined by the particular sensor or sequence of sensors activated by the user.

2. A device according to claim 1 wherein the sensors are arranged at or near a first external surface of the device in an identified configuration.

3. A device according to claim 2 wherein the sensors are masked from the external surface by a covering layer in order to protect the same from damage but are provided sufficiently close enough to the external surface so as to allow detection of the presence of a persons finger to be achieved by the sensors.

4. A device according to claim 2 wherein the configuration is selected so as to allow one finger of a user's hand to be able to reach each of the sensors in the array when the device is being held in the hand.

5. A device according to claim 1 wherein user interaction with the device is achieved by the selective placement of a user's finger on or in the vicinity of, the sensor locations.

6. A device according to claim 1 wherein there is provided an integrated circuit which allows a particular game or games to be provided for play on the device and an integrated circuit which allows detection and control of the sensor operation and the two integrated circuits are linked by control circuitry to allow the sensor and game operation to be controlled and integrated.

7. A device according to claim 6 wherein there is provided a means in the Integrated Circuit for the at least one sensor which detects the capacitance at the sensor.

8. A device according to claim 6 wherein the capacitance detected changes if a person's finger is placed on or in proximity to the particular sensor.

9. A device according to claim 8 wherein the detected change is attributed to a particular one of the plurality of sensors.

10. A device according to claim 7 wherein the user can use a stylus which is held in the hand and which is placed on particular locations with respect to the sensor array to cause a change in capacitance.

11. A device according to claim 1 wherein the interaction with the device is achieved via one of the sensors in an array.

12. A device according to claim 1 wherein the interaction with the device is achieved via sequential activation of the sensors in the array by controlled movement of the user's finger to particular sensor locations and different sequences of contact with the sensors result in different interaction with the device being achieved.

13. A device according to claim 1 wherein the interaction with the device is used to control the playing of a particular game and/or the selection of a particular game from a range of games.

14. A device according to clam 1 wherein the device includes further control means which may be actuated using buttons, keys or switches to allow other functions to be controlled.

15. A device according to claim 1 wherein the power source is either or both of one or more batteries, or a mains power supply.

16. A device according to claim 1 wherein software which allows the playing of the game is integrated within the device.

17. A device according to claim 1 wherein the software which allows the playing of a game is provided in a cartridge which can be selectively inserted into the device.

18. A device according to claim 1 wherein the device is hand held and can be held in one hand and interaction with the sensors can be achieved with the same hand.

19. A device according to claim 1 wherein the game which is played using the device is in the form of training and controlling the activities of a virtual companion.

20. A device according to claim 1 wherein the particular sensor or sequence of sensor activations which are required to be followed by the user to generate a particular control signal is displayed on the display screen to allow the user to follow the display and activate the sensor or sensor depicted.

21. A device according to claim 1 wherein the person using the device can determine a particular sensor activation or sequence of sensor activations and then allocate said activation(s) to a particular function which is to be performed by the device.

22. A device according to claim 21 wherein the sensor or sequence of sensor activations is stored in a memory in the device such that when the same is subsequently generated by the person, the designated function is performed by the device automatically.

23. An electronic game device, said device having a display screen for depicting a particular state of interaction with the device, at least one integrated circuit to allow a game or games to be played using the device, a power source to allow the device to be operable and control means to allow user interaction with the device, and wherein the control means includes one, or an array of, sensors, the location of which is/are identifiable on at least one surface of the device so as to allow user interaction via at least one sensor at an identifiable location with the device to control the game which includes controlling the activity of a virtual companion depicted on the display screen.

24. A device according to claim 23 wherein the virtual companion is depicted as a pet animal.

25. An electronic game device, said device having a display screen for depicting a particular state of interaction with the device, means to allow a game or games to be played using the device, a power source to allow the device to be operable and control means to allow user interaction with the device, and wherein the device is provided to be held in one hand and control of the same is achieved by movement of a finger of the hand placed selectively with respect to one or a plurality of sensor control means provided on or adjacent at least one surface of the device.

26. A device according to claim 25 wherein the sensors are provided on the same surface as the display screen.

27. An electronic device, said device having means for indicating a particular state of interaction with the device, a power source to allow the device to be operable and control means to allow user interaction with the device, and wherein the user interacts with the control mean via one, or an array of, sensors on the device and the user selectively places a finger or fingers in close proximity to the location of one sensor or a plurality of the sensors in sequence so as to define a control signal, said control signal used by the device to provide a change in condition of the device, if the control signal is recognised as one of a number of predefined control signals.

28. A device according to claim 27 wherein if the control signal is not recognised as being one of the predefined signals an indication is generated to the user.

29. A device according to claim 27 wherein the means for indicating the state of interaction is a display screen.

30. A device according to claim 27 wherein the device allows games to be played thereon and the user can interact with the games playing via the one or more sensors.

31. A device according to claim 27 wherein only one finger is required to be selectively placed with regard to the one or more sensors.

32. A device according to claim 27 wherein the location of the sensor(s) is/are identifiable on at least one surface of the device, although the sensors themselves may be offset behind the external surface.

33. A method of interacting with an electronic game device, said device having a display screen for depicting a particular state of interaction with the device, means to allow a game or games to be played using the device, a power source to allow the device to be operable and control means to allow user interaction with the device, and wherein the user interacts with the control mean which includes one, or an array of, sensors on the device and the user places a finger or fingers in close proximity to the location of one or a plurality of the sensors in sequence so as to define a control signal, said control signal used by the device to provide a change in condition of the device, if the signal is recognised as one of a number of predefined signals.

34. A method according to claim 33 wherein if the signal is not recognised as being one of the predefined signals an indication is generated to the user to cause them to retry.

35. A method according to claim 33 wherein only one finger is required to be selectively placed with regard to the one or more sensors.

36. A method according to claim 33 wherein the location of the sensor(s) is/are identifiable on at least one surface of the device, although the sensors themselves may be offset behind the external surface.
